# EUROPÄISCHE PATENTSCHRIFT

(11) **EP 2 355 950 B1**
(45) Veröffentlichungstag und Bekanntmachung des Hinweises auf die Patenterteilung: **29.06.2016**
(21) Anmeldenummer: 09771702.9
(22) Anmeldetag: 23.11.2009
(51) Int. Cl.: B23D 21/00, B23D 45/12

(54) **WARTUNGSVORRICHTUNG UND VERFAHREN ZUR HERSTELLUNG EINES WARTUNGSZUGANGS**
MAINTENANCE DEVICE AND METHOD FOR PRODUCING A MAINTENANCE ACCESS
DISPOSITIF DE MAINTENANCE ET PROCÉDÉ D'ÉTABLISSEMENT D'UN ACCÈS DE MAINTENANCE

(30) Priorität: 26.11.2008 DE 102008059062
(43) Veröffentlichungstag der Anmeldung: 17.08.2011
(73) Patentinhaber: Rosen Swiss AG, 6370 Stans (CH)
(72) Erfinder: ROSEN, Hermann, CH-6047 Kastanienbaum (Horw LO) (CH)
(74) Vertreter: Busse & Busse
(86) Internationale Anmeldenummer: PCT/EP2009/008324
(87) Internationale Veröffentlichungsnummer: WO 2010/060586

(56) Entgegenhaltungen:
- DE-A1- 4 429 874
- JP-A- 56 083 690
- JP-A- 2004 100 951
- US-A1- 2002 007 851

## Beschreibung

Die vorliegende Erfindung betrifft eine Wartungsvorrichtung zur Wartung eines längsgestreckten und insbesondere rohrförmigen Hohlkörpers, der zur Leitung eines Fluids ausgebildet ist, mit einer eine Funktionseinheit aufweisenden Dichtvorrichtung, die zur Abdichtung eines Arbeitsbereichs gegenüber einer Umgebung des Hohlkörpers vorgesehen ist und in eine Richtung entlang einer Oberfläche des Hohlkörpers bewegbar ist. Des Weiteren betrifft die Erfindung ein Verfahren zur Herstellung eines Wartungszugangs für einen vorbeschriebenen Hohlkörper, insbesondere eine Pipeline für die Leitung von beispielsweise Gas, Wasser oder Öl.

Bekannt aus der EP 0 935 089 B1 ist eine Vorrichtung und ein Verfahren zum Einschneiden einer Rohrleitung, bei denen ein Gehäuse einer auch einen Adapter umfassenden Dichtvorrichtung quer zur Längserstreckung der Rohrleitung und damit entlang der Oberfläche der Rohrleitung bewegt wird. Die Dichtvorrichtung sitzt dicht auf der Rohrleitung. Das Gehäuse mit einer als Schneidwerkzeug ausgebildeten Funktionseinheit dichtet den zwischen den beiden in Längsrichtung der Rohrleitung voneinander entfernten Adapterteilen befindlichen Arbeitsraum gegenüber einer Umgebung der Rohrleitung ab. Über Öffnen oder Entfernen des Gehäuses wird der Arbeitsraum oder-bereich zugänglich. Während der Bewegung wird durch die Funktionseinheit ein Schnitt durchgeführt. Anschließend wird ein Schieber durch den von dem Werkzeug ausgefrästen Bereich in die Leitung eingeführt, um diese bei spielsweise abzudichten. Mit der beschriebenen Vorrichtung können nur kurze Teileinschnitte einer Leitung oder kreisrunde Öffnungen entsprechend der Bohrergröße erzeugt werden. Die Form der Öffnung eines Wartungszugangs ist somit begrenzt. Um komplette Stücke einer Leitung zu entfernen, müsste die Vorrichtung neu angesetzt werden, wobei die Rohrleitung entlang ihres Umfangs zweifach geschnitten werden müsste. Der bereits geschnittene Bereich könnte hierbei freigegeben werden, wodurch ein solches Vorgehen nicht wie oftmals gewünscht während des laufenden Betriebs einer Leitung erfolgen kann. Des Weiteren könnte die Leitung instabil werden, da die Wartungsvorrichtung nicht zum vollständigen Schneiden der Leitung vorgesehen ist.

Aus der US 2002/0007851 A1 ist ein Gegenstand bekannt, bei dem durch Rotieren der Dichtvorrichtung um die Längsachse einer Pipeline herum diese eingeschnitten wird. Hierdurch wird ein Schnitt erzeugt, der eine Verschiebung der dann entstandenen zwei Rohrhälften gegeneinander erlaubt, wobei ein Dichtschluss gewahrt werden kann.

Aus der DE 44 29 874 A1 ist eine Wartungsvorrichtung bekannt, bei der eine Dichtvorrichtung über einen Adapter auf einem zu wartenden Hohlkörper dicht aufsitzt und an beweglichen Teilen gegenüber dem Adapter entweder in Umfangsrichtung drehbar oder, nach einer Ummontage von Führungselementen, axial verschiebbar ist.

Es ist Aufgabe der vorliegenden Erfindung, eine Wartungsvorrichtung und ein Verfahren zur Herstellung eines Wartungszugangs zu schaffen, die gegenüber dem Stand der Technik verbessert sind.

Die Aufgabe wird gelöst durch eine Wartungsvorrichtung gemäß Anspruch 1 sowie ein Verfahren zur Ausbildung bzw. Herstellung eines Wartungszugangs gemäß Anspruch 20.

Die erfindungsgemäße Wartungsvorrichtung zeichnet sich dadurch aus, dass die Dichtvorrichtung mit der Funktionseinheit bezogen auf die Oberfläche des Hohlkörpers wenigstens teilweise in Längsrichtung desselben und unter Wahrung eines Dichtschlusses bewegbar ist. Statt einer Bewegung in Umfangsrichtung der Rohrleitung kann die Rohrleitung in ihre Längsrichtung mit einer deutlich größeren Öffnung versehen werden. Schadhafte Stellen können somit in deutlich größerem Umfang, beispielsweise durch Ausfräsen, bei gleichzeitigem Weiterbetrieb der Rohrleitung ausgebessert werden.

Hierbei ist die Dichtvorrichtung mit einem Adapter versehen, der dichtend an den Hohlkörper ansetzbar ist, eine von dem Hohlkörper wegweisende Oberfläche aufweist und einen dem Zugriff auf den Hohlkörper dienenden Arbeitsbereich mit ausbildet. Die Dichtvorrichtung, die dichtend entlang der Rohrleitung bewegbar ist, wird somit nicht mit ihrer komplett der Rohrleitung zugewandten Fläche über die Oberfläche der Rohrleitung bewegt, vielmehr kann der Adapter unter Wahrung eines Dichtschlusses zwischen Vorrichtung und Rohrleitung an diese angesetzt sein und über seine Oberfläche eine Anlagefläche zur weiteren Dichtvorrichtung ausbilden. Reibungsverluste sind so minimiert. Unter Arbeitsbereich wird hierbei insbesondere der Bereich verstanden, in dem mit Wartungswerkzeugen wie Schneid-, Fräs-, Messeinrichtungen auf die Rohrleitungswand eingewirkt wird und der bei geöffneter Rohrleitung bzw. geöffnetem Hohlkörper gegenüber der Umgebung abzudichten ist.

Besonders vorteilhaft ist eine Ausbildung der Erfindung, bei der die Dichtvorrichtung neben der Bewegung in Längsrichtung auch in einer zweiten Richtung, quer zu dieser Längsrichtung bewegbar ist. Die zumindest eine Funktionseinheit, die in einem einfachen Ausführungsbeispiel durch die Dichtvorrichtung selbst in Form einer Abdeckung gebildet wird, kann bezogen auf die Oberfläche des zu wartenden Hohlkörpers entlang eines zweidimensionalen Bewegungsmusters bewegt werden. Entlang des beispielsweise als Rohrleitung ausgebildeten Hohlkörpers kann eine ovale, nahezu rechteckige oder anders geformte Öffnung - beispielsweise durch Ausfräsen aneinander grenzender Bereiche - erzeugt werden, während gleichzeitig die Dichtvorrichtung den an die Wand des Hohlkörpers angrenzenden Arbeitsbereich weiter gegenüber der Umgebung des Hohlkörpers und insbesondere der dem Adapter abgewandten Seite der Dichtvorrichtung abdichtet. Die Dichtvorrichtung selbst führt somit eine zweidimensionale Bewegung aus, die je nach Ausbildung der Funktionseinheit die Wartung des Hohlkörpers vereinfachen kann. Beispielsweise kann der sich flächig erstreckende Arbeitsbereich von verschiedenen Randbereichen her zugänglich gemacht werden kann, je nachdem, wie weit und wohin die Dichtvorrichtung entlang des Hohlkörpers in dessen Längs- und/oder Umfangsrichtung verschoben wird. Beispielsweise sind mit der erfindungsgemäßen Dichtvorrichtung schraubenlinienförmige Bewegungen entlang der Längserstreckung des Hohlkörpers möglich.

Statt der aus dem Stand der Technik bekannten möglichen Bewegung der Dichtvorrichtung in Umfangsrichtung entlang einer Zylindermantelfläche, sowie in die hierzu direkt entgegen gesetzte Richtung kann die Dichtvorrichtung auch in eine Richtung quer zu dieser bzw. diesen beiden Richtungen verlaufende Richtung bewegt werden. Eine solche beispielsweise in der Ebene einer Zylindermantelfläche verlaufende zweidimensionale Bewegung kann als sich überlagerte Bewegung zweier rechtwinklig zueinander verlaufenden Bewegungen der Dichtvorrichtung in schräger Bahn erfolgen, sie kann auch aus einer ersten Bewegung und einer nachfolgenden zweiten, um 90° abgewinkelten Bewegung bestehen.

Ein weiterer Vorteil der erfindungsgemäßen Gestaltung liegt in der Minimierung des Arbeitsbereiches in nicht mehr nur einer sondern nun zwei Dimensionen entlang der Außenseite des zu wartenden Hohlkörpers, der nicht Teil der Wartungsvorrichtung ist. Statt für eine seitliche Bewegung der Funktionseinheit relativ zur Dichtvorrichtung den dann wieder abzudichtenden Arbeitsbereich zu vergrößern, wird die Dichtvorrichtung mitbewegt und der Arbeitsbereich bleibt gleich groß. Insbesondere bei einem bereits geöffneten Hohlkörper, in dem weiter Fluide transportiert werden, ergibt sich nur ein minimaler Einfluss auf die Strömung im Hohlkörper. Der Arbeitsbereich kann klein gehalten werden.

Während der von der Wartungsvorrichtung zu wartende, längsgestreckte Hohlkörper vergleichsweise beliebige Querschnitte oder Querschnittsformen aufweisen kann, ist die Wartungsvorrichtung besonders für die Wartung von Pipelines oder anderen Rohrleitungen geeignet. Für die Erläuterung der nachfolgend beschriebenen Ausführungsformen der Erfindung wird daher davon ausgegangen, dass es sich bei dem Hohlkörper um eine Rohrleitung handelt. Einzelne erfindungsgemäße Weiterbildungen können gerade bei im Querschnitt runden oder zumindest bereichsweise gekrümmten Profilen besonders vorteilhaft sein.

Der Adapter der erfindungsgemäßen Dichtvorrichtung kann beispielsweise auf eine Rohrleitung aufgeschraubt oder -geschweißt werden. Hierfür kann er auf seiner Unterseite zusätzliche Dichtungsmittel wie beispielsweise Gummidichtungen aufweisen, die einen Dichtschluss zur Rohrleitung unterstützen oder bewirken.

In einer Weiterbildung der Erfindung handelt es sich bei dem Adapter um einen auf die Rohrleitung aufsetzbaren Profilkörper, der auf seiner der Rohrleitung zugewandten Innenseite in etwa an den Außenumfang der Rohrleitung angepasst ist und überwiegend in Form einer Schale oder Schelle ausgebildet ist, d.h. seine Dicke ist klein im Vergleich zu seiner flächigen Erstreckung entlang der Dichtvorrichtung oder der Rohrleitung. Dies ist besonders vorteilhaft, um den sich mit zunehmender Dicke des Adapters vergrößernden Arbeitsbereich zwischen Rohrleitung und weiterer Dichtvorrichtung möglichst flach und damit klein zu halten. Die Form des Adapters kann sich der Form des Hohlkörpers sowohl auf der Adapterinnenseite als auch auf der Adapteraußenseite anpassen.

Insbesondere bei einem mit einer gekrümmten, von der Rohrleitung weg gerichteten Oberfläche des Adapters ist eine Weiterbildung der Erfindung vorteilhaft, bei der die Wartungsvorrichtung eine Dichtvorrichtung umfasst, deren der Rohrleitung zuzuwendende Unterseite zumindest teilweise eine gekrümmte Fläche ausbildet. Die Dichtvorrichtung kann sich hierdurch dicht an die Rohrleitung oder bei einer Ausbildung mit Adapter an den Adapter anschmiegen oder sich auf diesem abstützen, wodurch sich -gegebenenfalls unter Verwendung weiterer Dichtungsmittel- ein Dichtschluss zwischen Rohrleitung und Dichtvorrichtung ergibt. Insbesondere bei Ausbildung mit einem flachen, gekrümmten Adapter ist die Dichtvorrichtung zumindest in dem Bereich, der entlang des Adapters bewegbar ist und der bei Bewegung der Funktionseinheit entlang des Arbeitsbereiches bewegt werden kann, mit ihren weiteren Teilen an den Adapter angepasst. Der Arbeitsbereich wird so möglichst klein gehalten, was den Einfluss auf eine bereits geöffnetes Rohrleitung minimiert, da die Form der der Rohrleitung zuzuwendenden Seite der weiteren Teile der Dichtvorrichtung dem entfernten Rohrwandbereich entsprechen kann und sich nur unweit von dessen ursprünglicher Position befindet, sofern der Adapter wie vorbeschrieben dünn ausgebildet ist.

Weiterhin von Vorteil ist eine Wartungsvorrichtung, bei der die Dichtvorrichtung im Wesentlichen schalen- oder hohlzylinderförmig ausgebildet ist. Neben den vorbeschriebenen Vorteilen hinsichtlich der geringen Beeinflussung einer im Betrieb befindlichen Rohrleitung wird für einen solchen Wartungszugang nur wenig Bauraum benötigt. Die oftmals an erdverlegte Pipelines anzubringende Wartungsvorrichtung baut mit einer aus einer oder mehreren Gleitschalen ausgebildeten oder zumindest eine Gleitschale umfassenden Dichtvorrichtung klein und unauffällig. Unter Gleitschale wird hierbei ebenfalls wieder eine Dichtvorrichtung verstanden, die sich überwiegend flächig in Längs- bzw. Umfangsrichtung der zu wartenden Pipeline erstrecken, wobei jedoch auch umlaufende Hohlzylinderprofile wie beispielsweise eher flach ausgebildete Schellen als Gleitschale bezeichnet werden können. Als "schalenförmig" werden demnach gekrümmte Flächen von Profilkörpern bezeichnet, deren Erstreckung zumindest in eine Richtung entlang der Fläche der Leitung größer -vorzugsweise deutlich größer- ist als ihre Dicke. Als Gleitschale wird somit ein Profilkörper der Dichtvorrichtung bezeichnet, der mit einer gekrümmten Fläche entlang und/oder im Extremfall direkt auf der Außenseite der Rohrleitung oder des Adapters bewegbar ist.

Vorzugsweise ist demnach auch die Oberfläche des Adapters als Gleitoberfläche ausgebildet, um zusammen mit einer Gleitschale oder dergleichen Profilkörper der Dichtvorrichtung eine möglichst flach bauende Wartungsvorrichtung zu schaffen und auf weitere Dichtungsmittel gegebenenfalls verzichten zu können. Die Dichtvorrichtung gleitet somit je nach Ausbildung der erfindungsgemäßen Wartungsvorrichtung entweder auf der Außenseite des Hohlkörpers oder auf der den gleitenden Teilen der Dichtvorrichtung zugewandten Seite des Adapters.

Die erfindungsgemäße Wartungsvorrichtung ist weiterhin verbessert, wenn die Funktionseinheit eine Schneidvorrichtung umfasst, die zur Einbringung einer Öffnung in den Hohlkörper ausgebildet ist. Dies kann beispielsweise mittels eines Fräs- oder anders gestalteten Schneidkopfes erfolgen, wobei als Schneidvorrichtung somit nicht nur vorzugsweise fräsende oder schneidende sondern ebenfalls auch andere Arten von spanabhebender Entfernung von Bereichen der Wand des Hohlkörpers gemeint sind. Das Einbringen einer Öffnung in den Hohlkörper über die Bewegung der Dichtvorrichtung, insbesondere in der Ausbildung als oder mit einer Gleitschale, führt ebenfalls wieder zu einer geringen Arbeitsbereichsgröße und damit zu einer nur wenig beeinflussten Strömung in der Pipeline. Die in Richtung der flächigen Erstreckung der Dichtvorrichtung bzw. der Außenseite des Hohlkörpers gegenüber der Dichtvorrichtung vorzugsweise im Wesentlichen unbewegliche Schneidvorrichtung wird im Arbeitsbereich von der Dichtvorrichtung geführt, wodurch Antriebsmittel für die Schneidvorrichtung für eine Bewegung in der Fläche nicht im von dem Fluid zugänglichen Bereich angeordnet werden müssen. Vielmehr reichen zur Bewegung der Schneidvorrichtung in der Fläche der Außenwand des Rohres erfindungsgemäß für Bewegung der Dichtvorrichtung vorzusehende Antriebsmittel, die beispielsweise die manuelle über einen oder mehrere Griffe ermöglichte Bewegung der Gleitschale verbessern, aus. Alternativ kann natürlich die Schneidvorrichtung ersetzt oder ergänzt werden durch bzw. mit anderen Vorrichtungen wie z.B. Messeinheiten. Das Ausschneiden beliebiger und nicht nur kreisförmiger oder linearer Schnitte in die Rohrleitung ermöglicht die Herstellung anpassungsfähigerer Wartungszugänge bei gleichzeitigem Weiterbetrieb der Rohrleitung. Etwaige vorhandene Adapter können gegebenenfalls von der Funktionseinheit bei Einbringen einer Öffnung teilweise mit entfernt werden, wobei die beispielsweise Schneid- oder Fräsvorrichtung eine Öffnung sowohl in den Adapter als auch in die Rohrleitung einbringt. Der Adapter bildet somit den Arbeitsbereich (mit) aus.

Je nach Art der Bewegung der Dichtvorrichtung und der Schneidvorrichtung wird eine Öffnung beispielsweise durch Ausfräsen einer Kontur erzeugt. Hierbei sollte der ausgeschnittene Bereich anschließend aus der Rohrleitung entfernt werden. Alternativ oder ergänzend kann eine Öffnung durch Entfernen aneinander grenzender Bereiche durch Ausfräsen erzeugt werden. Hierbei müssen lediglich die Metallspäne aus der Leitung entfernt werden, beispielsweise durch einen Filter oder einen Magneten. Alternativ können die Späne beispielsweise auch durch wenigstens einen einen definierten Medienaustritt erlaubenden Kanal durch die Funktionseinheit aus der in der Regel unter Überdruck stehenden Pipeline ausgeschwemmt werden.

Die erfindungsgemäße Wartungsvorrichtung ist vorteilhaft weitergebildet, wenn der Adapter mehrteilig in einer Richtung quer zur Längserstreckung und/oder in Richtung der Längserstreckung des Hohlkörpers ausgebildet ist. Eine solche mehrteilige Ausnehmung, insbesondere durch zwei schalen- und/oder ringförmige und zum Aufbringen auf eine Rohrleitung ausgebildete Segmente, die axial von der Rohrleitung beabstandet angeordnet sind, vergrößert den Einsatzbereich der erfindungsgemäßen Vorrichtung aufgrund größerer Anpassbarkeit.

Vorteilhafterweise kann der Arbeitsbereich der Wartungsvorrichtung zumindest teilweise durch wenigstens eine Ausnehmung des Adapters gebildet werden. Der beispielsweise von Teilen einer Schneidvorrichtung durchgreifbare Bereich ist durch die Form des Adapters genau auf die vorzunehmende Wartungsaktion anpassbar, was den abzudichtenden Bereich verkleinern und Wartungsvorrichtung und Wartung selbst sicherer gestalten kann.

Es kann erfindungsgemäß ebenfalls vorteilhaft sein, die Dichtvorrichtung mit oder ohne Adapter mehrteilig auszubilden. Die Dichtvorrichtung weist dann mehrere Gleitschalenelemente auf, die durch Bewegung miteinander und/oder unabhängig voneinander die Funktionseinheit(en) führen können. Gleichzeitig können die einzelnen Teile der Dichtvorrichtung durch Auseinanderfahren die geschaffene oder bereits vorhandene Wartungsöffnung freigeben. Entsprechend ist es vorteilhaft, wenn die Wartungsvorrichtung dahingehend weitergebildet ist, dass Teile der Dichtvorrichtung insbesondere unabhängig voneinander wenigstens in zwei quer zueinander stehende Richtungen entlang der Außenseite des zu wartenden Hohlkörpers bewegbar sind. Alternativ können die einzelnen Teile der Dichtvorrichtung jedoch auch dergestalt miteinander gekoppelt sein, dass die Bewegung des oder der weiteren Teile, beispielsweise nach Art einer Irisblende, miteinander gekoppelt sind oder über die Bewegung eines Teils etwaige weitere Elemente mitbewegt werden.

Unter Bewegung wird hierbei vorzugsweise eine Bewegung in Richtung der flächigen Erstreckung der Gleitflächen oder der Außenseite der Rohrleitung verstanden. Denkbar sind jedoch auch Bewegungen der Dichtvorrichtung in eine Richtung senkrecht zu der Bewegung in der Ebene, beispielsweise um eine Schneidvorrichtung in Kontakt mit der Rohrleitungswand zu überführen.

Bei einer mehrteiligen Wartungsvorrichtung sind einzelne Teile der Dichtvorrichtung vorteilhafterweise weiterhin mit wenigstens zwei einander zugewandten und insbesondere dichtungsoptimierten Anschlussseiten versehen, um besonders gut dichtend aneinander festgelegt werden zu können.

Gemäß einer weiteren vorteilhaften Weiterbildung der erfindungsgemäßen Wartungsvorrichtung geht die Erstreckung des Adapters in Richtung längs des Hohlkörpers über die Erstreckung der weiteren Teile der Dichtvorrichtung hinaus. Die Dichtvorrichtung kann damit über Antriebsmittel angetrieben werden, die in Längsrichtung der Wartungsvorrichtung betrachtet zwischen Adapter und beispielsweise Gleitschale angeordnet werden können. Bei einem beispielsweise an die Rohrleitung bzw. Pipeline geschweißten Adapter werden die Antriebsmittel an diesem abgestützt. Ein-Maß, mit dem sich der Adapter über die in einer Geschlossenstellung befindliche Dichtvorrichtung hinaus erstreckt, entspricht vorzugsweise einer Erstreckung der Öffnung in diese Richtung. Der Adapter kann damit auch ausreichend Gleitflächen bereitstellen, um die Öffnung freizugeben.

Vorzugsweise weist die Wartungsvorrichtung zumindest einen Magnethalter auf. Beispielsweise auszuschneidende Teile der Rohrleitung oder Metallspäne können an einem Fallen in die Rohrleitung gehindert werden. Vorzugsweise ist der Magnethalter Teil der Dichtvorrichtung, um entsprechend mitbewegbar zu sein.

Für eine Wartung, bei der die Rohrleitung komplett durchtrennt werden muss, kann es vorteilhaft sein, wenn die Wartungsvorrichtung einen sich entlang der Dichtvorrichtung erstreckenden Rahmen zur Stabilisierung des Hohlkörpers aufweist. Dieser kann direkt an der Dichtvorrichtung befestigt sein oder so ausgebildet sein, dass er sich neben einem etwaigen Adapter an die Rohrleitung anbringen lässt.

Die Betätigung und Überwachung der erfindungsgemäßen Vorrichtung ist weiterhin verbessert, wenn die Wartungsvorrichtung Sensoren zur Positionserkennung der Dichtvorrichtung umfasst, die weiterhin vorteilhafterweise über entsprechende Kommunikationsmittel insbesondere aus der Ferne abgefragt werden können und deren Information über zugehörige Anzeigemittel angezeigt werden können.

Die vorstehende Aufgabe wird ebenfalls gelöst durch eine Verfahren zur Ausbildung eines Wartungszugangs an einem längsgestreckten und insbesondere rohrförmigen Hohlkörper, der zur Leitung eines Fluids ausgebildet ist, insbesondere unter Verwendung einer Wartungsvorrichtung nach einem der vorherigen Ansprüche, wobei eine einen Adapter aufweisende Dichtvorrichtung der Form nach der Außenseite des Hohlkörpers angepasst und dichtend an diesen angebracht wird, die Dichtvorrichtung dergestalt ausgebildet und angebracht wird, dass ein Arbeitsbereich zur Einbringung einer Öffnung in die Rohrleitung ausgebildet wird, der von der Dichtvorrichtung gegenüber einer Umgebung des Hohlkörpers abgedichtet wird, wobei die mit einer Funktionseinheit versehene Dichtvorrichtung entlang des Hohlkörpers in einer Richtung bewegbar ist, wobei sich dass Verfahren dadurch auszeichnet, dass zur Einbringung einer Öffnung eine ein auf eine Wandung des Hohlkörpers einwirkendes Schneidwerkzeug umfassende Funktionseinheit über eine Bewegung der Dichtvorrichtung bezogen auf eine Oberfläche des Hohlkörpers wenigstens teilweise in dessen Längsrichtung bewegt wird und eine Wand des Hohlkörpers einschneidet, wobei gleichzeitig die Dichtvorrichtung den Arbeitsbereich gegenüber der Umgebung weiter abdichtet. Mit diesem Verfahren kann die Wartung einer Pipeline, insbesondere das Öffnen der Rohrleitungswand im laufenden Betrieb komfortabler gestaltet werden, da die für die Bewegung der Schneidvorrichtung in der Ebene notwendigen Antriebsmittel nicht mehr mit dem Fluid in Kontakt kommen und der Einfluss auf die Strömung wie vorbeschrieben möglichst gering gehalten werden kann. Es können lange Schnitte entlang der Längsrichtung der Pipeline vorgenommen werden, was bei gleichzeitiger Abdichtung Wartungsvorgänge vereinfachen kann.

Bei einer weiteren Ausbildung der Verfahrens ist es vorteilhaft, dass das Schneidwerkzeug zur Einbringung einer Öffnung in den Hohlkörper über die Dichtvorrichtung sowohl in dessen Längsrichtung als auch quer zu dieser Richtung bewegbar ist und hierdurch insbesondere bei einer bei einer entsprechenden Krümmung als Gleitschale ausgebildeten Dichtvorrichtung eine Bewegung auf einer Zylindermantelfläche vollführt. Es können bei Dichtschluss über entsprechende Antriebs- und gegebenenfalls Steuermittel nahezu beliebige zweidimensionale Formen von Öffnungen erzeugt werden. Über Versatz und Bewegen der Funktionseinheit können dies auch dreidimensionale Muster sein, bei denen z.B. ein Teil der Wandung nicht durchtrennt, sondern abgeschliffen wird.

Gemäß einem weiteren erfindungsgemäßen Verfahrensschritt kann es sich als vorteilhaft erweisen, die Bewegung der Schneidvorrichtung nacheinander erst in eine Richtung und dann in einer Richtung quer zu der ersten Richtung auszuführen.

Das erfindungsgemäße Verfahren ist weiterhin verbessert, wenn dieselbe Schneidvorrichtung durch Verfahren von dichtenden Teilen der Dichtvorrichtung in demselben Arbeitsbereich ohne Umpositionieren des oder der Adapter mehrere diskrete oder später zusammenzuführende Öffnungen in die Rohrleitungswand einbringt. Dies kann beispielsweise für das gleichzeitige Einbringen mehrerer Wartungs- oder Messinstrumente sinnvoll sein.

Vorteilhafterweise kann durch Verschieben der Dichtvorrichtung entlang des Adapters der Arbeitsbereich von einer dem Adapter abgewandten Seite der Gleitschale betrachtet aus freigegeben werden, wobei durch die der Krümmung der Rohrleitung angepasste schalenförmige Elemente der Dichtvorrichtung wenig Platz benötigt wird.

Besonders bevorzugt wird die Öffnung durch Auseinanderbewegen einzelner Teile einer mehrteiligen Dichtvorrichtung zugänglich, so dass der Zugang zur Rohrleitung von der Mitte der Öffnung her erfolgen kann und/oder die Art der Öffnung variabler gesteuert werden kann.

Eine Weiterbildung der erfindungsgemäßen Wartungsvorrichtung ist weiterhin mit einer Dichtvorrichtung mit einer auswechselbaren Dichtung versehen. Diese ist bevorzugt von außen zugänglich und ermöglicht ein Wechseln während des Betriebs der Pipeline ohne größere Verluste des Mediums in der Pipeline.

Zusätzlich kann es vorteilhaft sein, die Wartungsvorrichtung mit einem der Dichtvorrichtung zuzuordnenden Schieber zu versehen, der ein Wechseln zumindest eines Teils der Funktionseinheit ermöglicht. Nach Abschluss der Wartungsarbeiten kann die Wartungsvorrichtung mit einer Ummantelung versehen werden, die der Sicherheit und dem Schutz der Reinstallation dient.

Weitere Vorteile und Einzelheiten der Erfindung lassen sich der nachfolgenden Figurenbeschreibung entnehmen. Auf schematische Weise zeigt:
- Fig. 1: einen erfindungsgemäßen Gegenstand in einer perspektivischen Ansicht,
- Fig. 2: den Gegenstand nach Fig. 1 in einem Längsschnitt,
- Fig. 3: den Gegenstand nach Fig. 1 in einem Längsschnitt,
- Fig. 4: einen weiteren erfindungsgemäßen Gegenstand in einer perspektivischen Ansicht,
- Fig. 5: den Gegenstand nach Fig. 4 in einem Längsschnitt,
- Fig. 6: eine gegenüber Ansicht der Fig. 5 um 90° gedrehte Ansicht des Gegenstands nach Fig. 4,

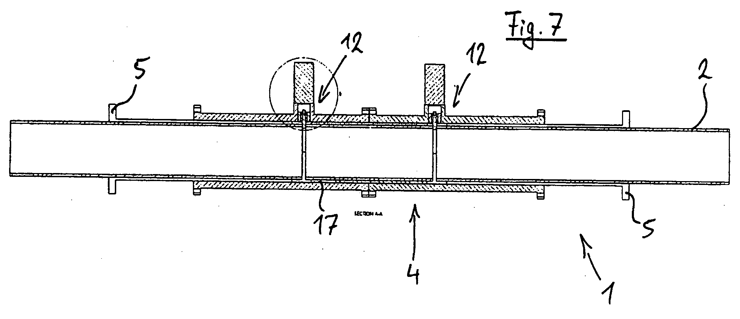

- Fig. 7: den Gegenstand nach Fig. 4 in einer Weiterbildung,
- Fig. 8: eine teilweise Ansicht des Gegenstands gemäß Fig. 1.
- Fig. 9: einen weiteren erfindungsgemäßen Gegenstand in einer perspektivischen Ansicht,
- Fig. 10: den Gegenstand nach Fig. 9 in einem Längsschnitt,
- Fig. 11: einen weiteren erfindungsgemäßen Gegenstand in einer perspektivischen Ansicht,
- Fig. 12: den Gegenstand nach Fig. 11 in einem Längsschnitt.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

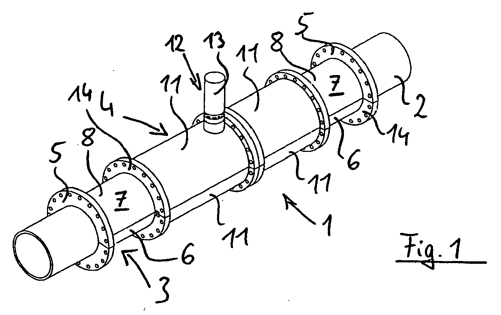

In Fig. 1 ist eine erfindungsgemäße Wartungsvorrichtung 1 gezeigt, die bereits auf einem nicht zur Erfindung gehörenden Hohlkörper 2 in Form einer Pipeline angeordnet ist. Die Wartungsvorrichtung umfasst einen mehrteiligen Adapter 3 mit äußeren Befestigungsflanschen 5 als Teil einer mehrteiligen Dichtvorrichtung 4.

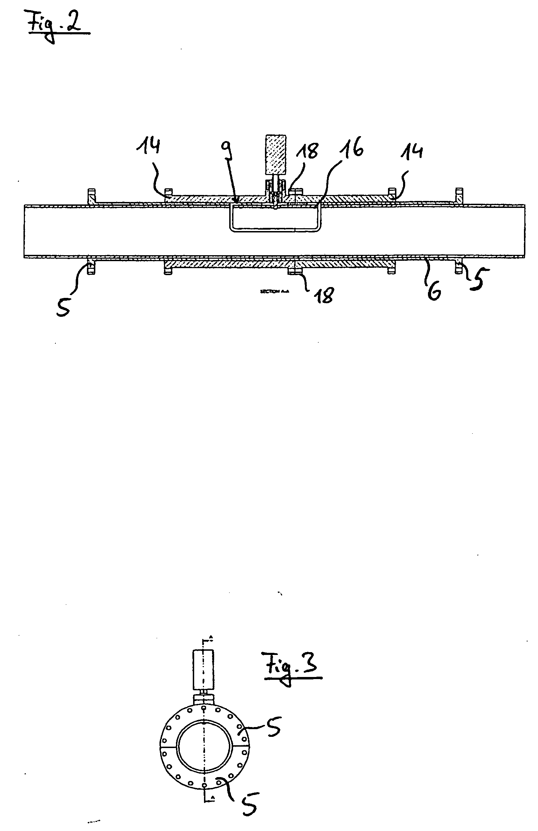

Der Adapter 3 umfasst einen in der Fig. 1 unteren Teil 6 nach Art eines hohlen Halbzylinders. Dieser ist der Form nach auf die zu wartende Rohrleitung 2 angepasst und auf dieser vorzugsweise befestigt, beispielsweise angeschweißt. Die von der Rohrleitung 2 weg weisende Oberfläche 7 des Adapters 3 ist als Gleitoberfläche für die weiteren Teile der Dichtvorrichtung 4 ausgebildet. Die Rohrleitung ist bei dem gezeigten Ausführungsbeispiel vollständig umfasst (vgl. Fig. 3).

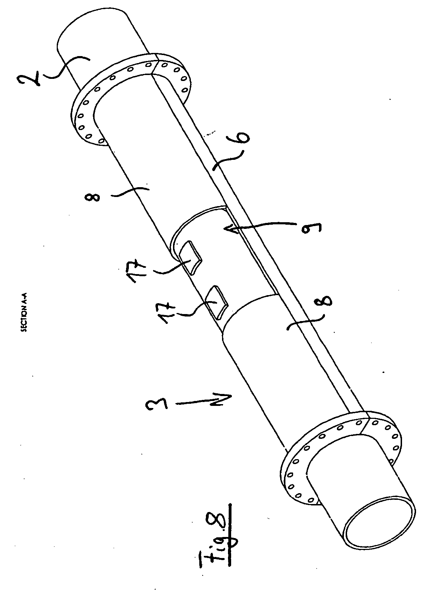

Wie der Fig. 8 zu entnehmen weist der Adapter 3 zwei obere mit Abstand voneinander angeordnete Teile 8 auf, während der untere Teil 6 einteilig ist. Zusammen bilden Teil 6 und die Teile 8 einen Arbeitsbereich 9 aus, der von der Dichtvorrichtung 4 gegenüber der Umgebung abgedichtet werden kann und in Fig. 1 abgedichtet ist.

Die Dichtvorrichtung 4 selbst umfasst vier im Wesentlichen der Form nach als halbe Hohlzylinder ausgebildete Gleitschalen 11, die mit ihrer in der Fig. 1 nicht sichtbaren Innenseite über die Oberfläche 7 gleiten können. Gegebenenfalls kann zur Verbesserung der Abdichtung des Arbeitsbereiches zwischen den beiden Gleitoberflächen Dichtungsmittel angeordnet werden.

Als Funktionseinheit 12 umfasst die Dichtvorrichtung 4 eine Schneidvorrichtung mit einem in einem Gehäuse 13 angeordneten Motor, bei dem es sich beispielsweise um einen Elektromotor oder einen Hydraulikmotor handeln kann. Die Funktionseinheit ist von der Dichtvorrichtung 4 bewegbar. In der Fig. 2 ist in einem Längsschnitt zu erkennen, wie die Schneidvorrichtung zur Erstellung einer Öffnung in der Rohrwand von der Dichtvorrichtung geführt wurde.

Die vier schalenförmigen Teile 11 der Dichtvorrichtung 4 sind außenseitig ebenfalls mit Befestigungsflanschen 14 versehen. Zwischen den Flanschen 5 und 14 können beispielsweise Antriebsmittel zur Bewegung der Dichtvorrichtung in axialer und Umfangsrichtung angeordnet werden.

Ersichtlich insbesondere in Fig. 2 ist der Arbeitsbereich 9 sehr klein gehalten, wodurch der Rohrleitungsquerschnitt auch nach einem möglichen Entfernen des ausgeschnittenen Wandungsteils 16 nahezu unverändert bleibt. Der Wandungsteil 16 wird durch die in Fig. 8 deutlicher sichtbaren Magnethalter 17 an einem Hineinfallen in die Rohrleitung gehindert. Die Strömung in der Pipeline ist nur zu einem sehr kleinen Ausmaß gestört.

Die beiden in der Figur linken und rechten Teile 11 der Dichtvorrichtung 4 sind über Befestigungsflansche 18 aneinander festlegbar. Zur sicheren Festlegung nach erfolgter Wartung können die beiden Hohlzylinder beispielsweise aneinander verschraubt werden.

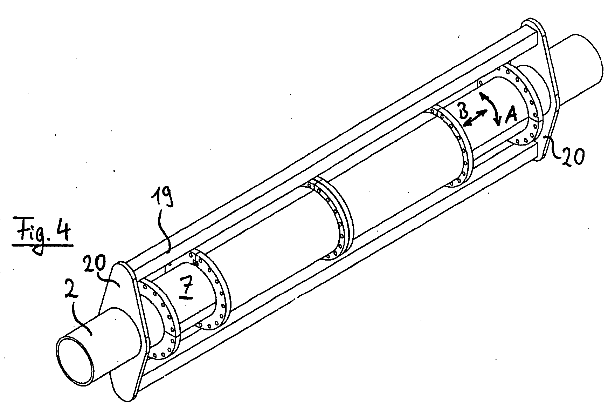

Während die in Fig. 2 gezeigte Wartungsvorrichtung die Rohrleitung nicht vollumfänglich durchtrennen kann, ist die erfindungsgemäße Wartungsvorrichtung gemäß Fig. 4 genau hierzu ausgebildet. Ein Rahmen 19 ist zur zusätzlichen Stabilisierung der Rohrleitung 2 über Flansche 20 auf die Rohrleitung 2 aufgeschweißt und Teil der Wartungsvorrichtung 1.

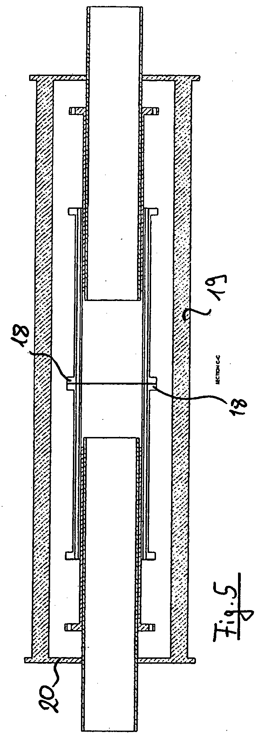

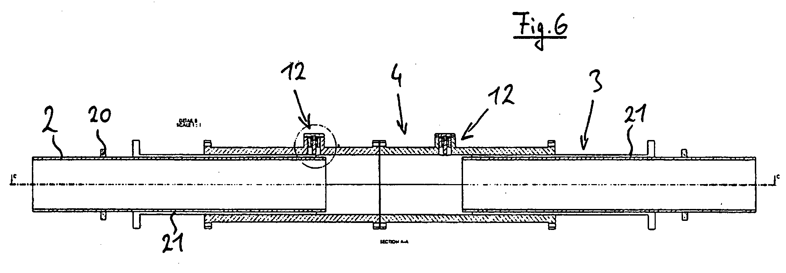

Im Vergleich zur Wartungsvorrichtung nach Fig. 1 ist die in der Fig. 4 gezeigte Ausführungsform mit zwei Funktionseinheiten 12 in Form von Schneidvorrichtungen versehen. Nach erfolgter Wartung kann ein Teil der Funktionseinheit 12 entfernt werden, wie durch den in Fig. 6 fehlenden Motorgehäuseteil angedeutet wird. Der Adapter 3 ist gemäß der Fig. 4 bis 6 aus zwei jeweils zweiteiligen Hohlzylindern 21 aufgebaut, die voneinander in axialer Richtung der Rohrleitung 2 beabstandet angeordnet sind.

Die Dichtvorrichtung 4 ist ähnlich wie die in Fig. 2 gezeigt aufgebaut. In Umfangsrichtung um die Rohrleitung 2 herum vollführen Gleitschalen auf der Gleitoberfläche 7 des Adapters 3 eine 360°-Bewegung, wodurch bei abgesenktem Schneidwerkzeug die Rohrleitung vollständig durchtrennt wird.

Ein Magnethalter 17 dient wieder der Halterung der ausgeschnittenen Rohrleitungsteile bzw. dem Auffangen von Metallspänen. Nach dem Durchtrennen der Rohrleitung kann die Dichtvorrichtung 4 entlang der Flansche 18 geöffnet werden, um den ausgeschnitten Abschnitt oder die Späne zu entnehmen.

Die Bewegung der Dichtvorrichtung 4 in eine Richtung A entlang des Umfangs der Rohrleitung bzw. der Gleitoberfläche 7 des Adapters 3 ist in Fig. 4 angedeutet. In der Ebene der Oberfläche 7 entspricht eine Richtung quer zu dieser Richtung der der durch den Doppelpfeil B. Für die durch die Doppelpfeile angedeuteten, entgegengesetzten Richtungen gilt das Entsprechende.

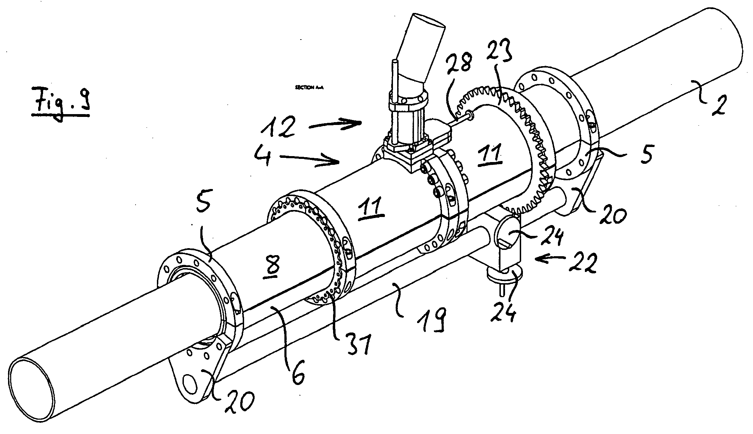

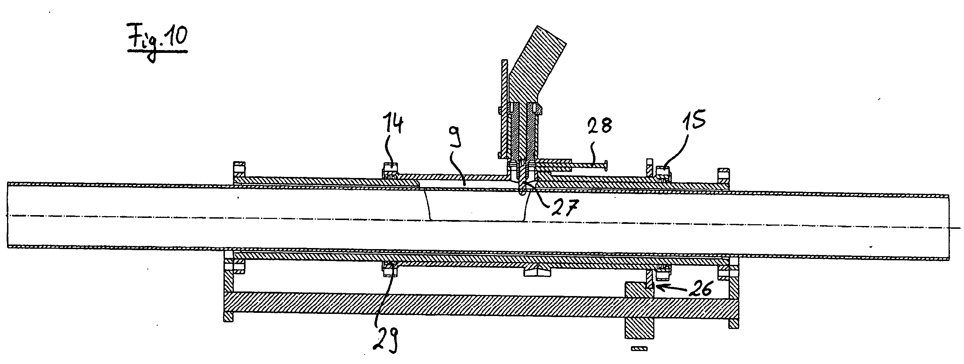

Eine Wartungsvorrichtung einer weiteren erfindungsgemäßen Ausbildung ist in Fig. 9 mit einer als Schneidvorrichtung ausgebildeten Funktionseinheit 12 und einem Rahmen 19 gezeigt. Der Rahmen 19 ist über seine Flansche 20 an den Befestigungsflanschen 5 befestigt. Ein Antriebsmittel 22 dient der Bewegung der Dichtvorrichtung 4 sowohl in Umfangs- als auch in Längsrichtung der Pipeline 2. Hierfür ist das Antriebsmittel 22 mit einer Nut versehen, in der ein an der Dichtvorrichtung 4 befestigter Zahnkranz 23 in Längsrichtung unverschiebbar, in Umfangsrichtung jedoch beweglich gelagert ist. Handkurbeln 24 dienen der manuellen Betätigung der Dichtvorrichtung. Es versteht sich, dass auch motorische Mittel verwendbar sind. Durch Betätigung einer der Handkurbeln 24 verfährt das Antriebsmittel 22 entlang des Rahmens 19. Über das in einer Nut 26 geführte Zahnrad wird die Dichtvorrichtung 4 über das Antriebsmittel 22 mitbewegt. Durch Betätigen der weiteren Handkurbel 24 wird die Dichtvorrichtung 4 in Umfangsrichtung mittels des Zahnkranzes 23 bewegt (vgl. auch Fig. 10). Um ein Auswechseln des Fräskopfes 27 auch im laufenden Betrieb zu ermöglichen, könnte einerseits die Funktionseinheit 12 in einen Bereich ohne direkten Kontakt zur Pipeline 2 verschoben werden. Alternativ kann nach Zurückziehen des Fräskopfes 27 ein Schieber 28 durch Verschieben in Richtung der Längserstreckung der Rohrleitung den Arbeitsbereich 9 zusätzlich von der äußeren Umgebung abdichten. Anschließend kann der Fräskopf 27 aus der Funktionseinheit 12 entfernt werden, ohne dass ein direkter Kontakt zwischen Pipelineinnenraum und der Umgebung hergestellt würde.

Zur zusätzlichen Abdichtung der Gleitschalen 11 gegenüber dem oberen und unteren Teil 6, 8 des Adapters können auswechselbare Dichtungen 29, insbesondere in den Endbereichen der Gleitschalen 11 vorgesehen werden. Diese sind im Bereich der äußeren Flansche 14 einen Dichtschluss zwischen den Teilen 8, 6 und 11 herstellend angeordnet. Nach Abnahme der in der Fig. 9 ersichtlichen äußeren Befestigungen 31 können diese Dichtungen 29 auch im noch laufenden Betrieb der Pipeline entfernt und erneuert werden.

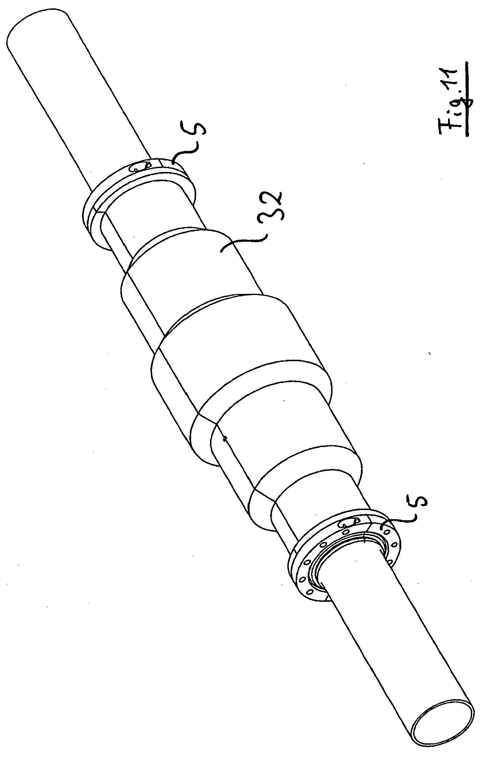

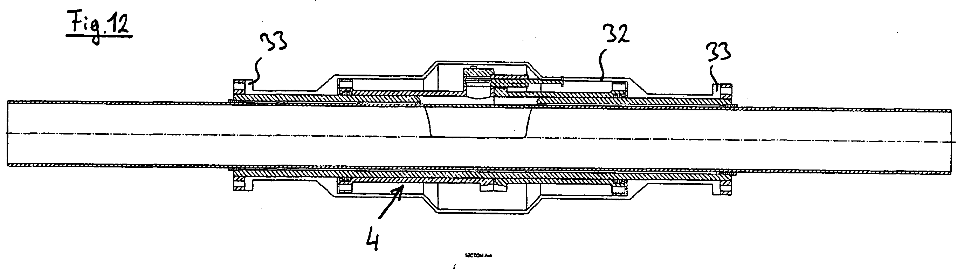

Nach Abschluss der Wartungsoperation kann die Dichtvorrichtung gemäß der in den Fig. 11 und 12 offenbarten Wartungsvorrichtung mit einer Ummantelung 32 gesichert werden. Die Ummantelung, die beispielsweise den kompletten Bereich der Dichtvorrichtung zwischen den äußeren Flanschen 5 umfasst und durch beispielsweise abschließbare Schrauben gesichert ist, schützt vor einer unbefugten Betätigung der Wartungsvorrichtung, in dem der Zugang zu den insbesondere beweglichen Teilen verhindert wird. Die Ummantelung 32 ist ihrer Form nach daher ausgehend von äußeren Flanschen 33 mit einem bis zur Mitte zwischen den beiden Flanschen 33 ansteigenden Querschnitt versehen, welcher auf die zu ummantelnde Dichtvorrichtung 4 abgestimmt ist.

## Patentansprüche

1. Wartungsvorrichtung zur Wartung eines längsgestreckten und insbesondere rohrförmigen Hohlkörpers (2), der zur Leitung eines Fluids ausgebildet ist, mit einer eine Funktionseinheit (12), aufweisenden Dichtvorrichtung (4), die zur Abdichtung eines Arbeitsbereichs (9) gegenüber einer Umgebung des Hohlkörpers (2) vorgesehen ist und entlang einer Oberfläche des Hohlkörpers (2) bewegbar ist, wobei die Dichtvorrichtung mit einem Adapter (3) versehen ist, der dichtend an den Hohlköper (2) ansetzbar ist, eine von dem Hohlkörper (2) weg weisende Oberfläche (7) aufweist und einen dem Zugriff auf den Hohlkörper (2) dienenden Arbeitsbereich (9) mit ausbildet, wobei ein dichtendes Teil (11) der Dichtvorrichtung entlang des Adapters (3) unter Wahrung eines Dichtschlusses über den Arbeitsbereich (9) sowohl in einer ersten Richtung (A) wie in eine quer zu der ersten verlaufenden zweiten Richtung (B) derart bewegbar ist, dass die zumindest eine Funktionseinheit (12) bezogen auf eine Oberfläche des zu wartenden Hohlkörpers (2) entlang eines zweidimensionalen Bewegungsmusters bewegbar ist.

2. Wartungsvorrichtung nach Anspruch 1, **dadurch gekennzeichnet, dass** die Oberfläche (7) des Adapters (3) als Gleitoberfläche ausgebildet ist.

3. Wartungsvorrichtung nach einem der Ansprüche 1 oder 2, **dadurch gekennzeichnet, dass** der Adapter (3) mehrteilig in einer Richtung quer zur Längserstreckung und/oder in Richtung der Längserstreckung des Hohlkörpers (2) ist.

4. Wartungsvorrichtung nach einem der Ansprüche 1 bis 3, **dadurch gekennzeichnet, dass** der Arbeitsbereich (9) zumindest teilweise durch wenigstens eine Ausnehmung des Adapters (3) gebildet wird.

5. Wartungsvorrichtung nach einem der Ansprüche 1 bis 4, **dadurch gekennzeichnet, dass** die Erstreckung des Adapters (3) in Richtung längs des Hohlkörpers (3) über die Erstreckung der weiteren Teile (11) der Dichtvorrichtung (4) hinausgeht.

6. Wartungsvorrichtung nach einem der vorhergehenden Ansprüche, **dadurch gekennzeichnet, dass** eine dem zu wartenden Hohlkörper (2) zugewandte Unterseite der Dichtvorrichtung (4) eine gekrümmte Fläche ausbildet.

7. Wartungsvorrichtung nach Anspruch 6, **dadurch gekennzeichnet, dass** die Dichtvorrichtung (4) Gleitelemente aufweist, die im Wesentlichen schalen- oder hohlzylinderförmig ausgebildet ist.

8. Wartungsvorrichtung nach einem der vorhergehenden Ansprüche, **dadurch gekennzeichnet, dass** die Funktionseinheit (12) eine Schneidvorrichtung umfasst, die zur Einbringung einer Öffnung in den Hohlkörper (2) insbesondere auf fräsende oder andere spanabhebende Weise ausgebildet ist.

9. Wartungsvorrichtung nach einem der vorhergehenden Ansprüche, **dadurch gekennzeichnet, dass** die Dichtvorrichtung (4) mehrteilig ausgebildet ist.

10. Wartungsvorrichtung nach Anspruch 9, **dadurch gekennzeichnet, dass** einzelne Teile (11) der Dichtvorrichtung (4) insbesondere unabhängig voneinander wenigstens in zwei quer zueinander stehende Richtungen (A,B) entlang der Außenseite des zu wartenden Hohlkörpers (2) bewegbar sind.

11. Wartungsvorrichtung nach Anspruch 9 oder 10, **dadurch gekennzeichnet, dass** die einzelnen Teile (11) der Dichtvorrichtung (4) wenigstens zwei einander zugewandte Anschlussseiten aufweisen.

12. Wartungsvorrichtung nach einem der vorhergehenden Ansprüche, **gekennzeichnet durch** ein eine zweidimensionale Bewegung der Dichtvorrichtung (4) ermöglichende Antriebsvorrichtung.

13. Wartungsvorrichtung nach einem der vorhergehenden Ansprüche, **gekennzeichnet durch** zumindest einen Magnethalter (17).

14. Wartungsvorrichtung nach einem der vorhergehenden Ansprüche, **gekennzeichnet durch** einen sich entlang der Dichtvorrichtung (4) erstreckenden Rahmen (19) zur Stabilisierung des Hohlkörpers (2).

15. Wartungsvorrichtung nach einem der vorhergehenden Ansprüche, **gekennzeichnet durch** Sensoren zur Positionserkennung der Dichtvorrichtung (4).

16. Wartungsvorrichtung nach einem der vorhergehenden Ansprüche für einen als Pipeline ausgebildeten Hohlkörper (2), wobei der Adapter (3) und die weitere Dichtvorrichtung (4) als schalen- oder zylinderförmige Flächenelemente ausgebildet sind.

17. Wartungsvorrichtung nach einem der vorhergehenden Ansprüche, **dadurch gekennzeichnet, dass** die Dichtvorrichtung (4) eine auswechselbare Dichtung (29) aufweist.

18. Wartungsvorrichtung nach einem der vorhergehenden Ansprüche, **dadurch gekennzeichnet, dass** die Dichtvorrichtung (4) einen Schieber (28) umfasst, der ein Wechseln zumindest eines Teils der Funktionseinheit (12) ermöglicht.

19. Wartungsvorrichtung nach einem der vorhergehenden Ansprüche, **gekennzeichnet durch** eine Ummantelung (32).

20. Verfahren zur Ausbildung eines Wartungszugangs an einem längsgestreckten und insbesondere rohrförmigen Hohlkörper (2), der zur Leitung eines Fluids ausgebildet ist, insbesondere unter Verwendung einer Wartungsvorrichtung (1) nach einem der vorherigen Ansprüche, wobei eine einen dichtend an den Hohlkörper (2) anzusetzenden, mit einer von dem Hohlkörper (2) wegweisende Oberfläche (7) versehenen und einen dem Zugriff auf den Hohlkörper (2) dienenden Arbeitsbereich mit ausbildenden Adapter (3) aufweisende Dichtvorrichtung (4) der Form nach der Außenseite des Hohlkörpers (2) angepasst und dichtend an diesen angebracht wird, die Dichtvorrichtung (4) dergestalt ausgebildet und angebracht wird, dass ein Arbeitsbereich (9) zur Einbringung einer Öffnung in die Rohrleitung (2) ausgebildet wird, der von der Dichtvorrichtung (4) gegenüber einer Umgebung des Hohlkörpers (2) abgedichtet wird, wobei die mit einer Funktionseinheit (12) versehene Dichtvorrichtung (4) entlang des Hohlkörpers (2) bewegbar ist und die zur Einbringung einer Öffnung die ein auf eine Wandung des Hohlkörpers (2) einwirkendes Schneidwerkzeug umfassende Funktionseinheit (12) über eine Bewegung der Dichtvorrichtung (4) bezogen auf eine Oberfläche des Hohlkörpers (2) sowohl in einer ersten Richtung (A) wie in einer quer zu der ersten verlaufenden zweiten Richtung (B) entlang eines zweidimensionalen Musters bewegt wird und eine Wand des Hohlkörpers (2) einschneidet, wobei gleichzeitig die Dichtvorrichtung (4) den Arbeitsbereich (9) gegenüber der Umgebung weiter abdichtet und wobei Teile (11) der Dichtvorrichtung (4) entlang des Adapters (3) unter Wahrung eines Dichtschlusses verschoben werden.

21. Verfahren nach Anspruch 20, **dadurch gekennzeichnet, dass** die Dichtvorrichtung (4) bezogen auf die Oberfläche des Hohlkörpers (2) in zwei Dimensionen (A,B) bewegt wird.

22. Verfahren nach Anspruch 20 oder 21, **dadurch gekennzeichnet, dass** das Schneidwerkzeug zur Einbringung einer Öffnung in den Hohlkörper (12) über die Dichtvorrichtung (4) sowohl in dessen Längsrichtung als auch quer zu dieser Richtung bewegbar ist.

23. Verfahren nach einem der Ansprüche 20 bis 22, **dadurch gekennzeichnet, dass** die Bewegung der Schneidvorrichtung nacheinander erst in eine Richtung (A) und dann in einer Richtung (B) quer zu der ersten Richtung (B) ausgeführt wird.

24. Verfahren nach einem der Ansprüche 20 bis 23, **dadurch gekennzeichnet, dass** durch Verschieben zumindest einer Gleitschale der Dichtvorrichtung (4) entlang des Adapters (3) der Arbeitsbereich (9) von einer dem Adapter (7) abgewandten Seite der Gleitschale betrachtet aus freigegeben wird.

25. Verfahren nach Anspruch 24, **dadurch gekennzeichnet, dass** die Öffnung durch Auseinanderbewegen einzelner Teile (11) der mehrteiligen Dichtvorrichtung (4) zugänglich wird.

## Claims

1. Maintenance device for performing maintenance on an elongate, and in particular tubular, hollow body (2) which is designed to conduct a fluid, comprising a sealing device (4) which comprises a functional unit (12), is provided for sealing off a working region (9) from a surrounding area of the hollow body (2), and is movable along a surface of the hollow body (2), wherein the sealing device is provided with an adapter (3) which can be placed on the hollow body in a sealing manner, comprises a surface (7) which faces away from the hollow body (2), and forms a working region (9) used to access the hollow body (2), wherein a sealing part (11) of the sealing device can be moved, whilst maintaining a tight seal, along the adapter over the working region (9) in both a first direction (A) and a second direction (B), which is transverse to said first direction, such that the at least one functional unit (12) is movable along a two-dimensional movement pattern relative to a surface of the hollow body (2) on which maintenance is to be performed.

2. Maintenance device according to claim 1, **characterised in that** the surface (7) of the adapter (3) is formed as a sliding surface.

3. Maintenance device according to either claim 1 or claim 2, **characterised in that** the adapter (3) has multiple parts in a direction transverse to the longitudinal extension and/or in the direction of the longitudinal extension of the hollow body (2).

4. Maintenance device according to any of claims 1 to 3, **characterised in that** the working region (9) is formed at least in part by at least one recess in the adapter (3).

5. Maintenance device according to any of claims 1 to 4, **characterised in that** the extension of the adapter (3) in the longitudinal direction of the hollow body (3) exceeds the extension of the other parts (11) of the sealing device (4).

6. Maintenance device according to any of the preceding claims, **characterised in that** a lower face of the sealing device (4) which faces the hollow body (2) on which maintenance is to be performed forms a curved surface.

7. Maintenance device according to claim 6, **characterised in that** the sealing device (4) comprises sliding elements which are substantially shell-shaped or hollow cylindrical.

8. Maintenance device according to any of the preceding claims, **characterised in that** the functional unit (12) comprises a cutting device that is designed to make an opening in the hollow body (2), in particular by milling or some other process for cutting metal.

9. Maintenance device according to any of the preceding claims, **characterised in that** the sealing device (4) has multiple parts.

10. Maintenance device according to claim 9, **characterised in that** individual parts (11) of the sealing device (4) are movable, in particularly independently of one another, over the outside of the hollow body (2) on which maintenance is to be performed, at least in two directions (A, B) which are transverse to one another.

11. Maintenance device according to either claim 9 or claim 10, **characterised in that** the individual parts (11) of the sealing device (4) have at least two connecting faces which face one another.

12. Maintenance device according to any of the preceding claims, **characterised by** a drive device which makes it possible for the sealing device (4) to move in two dimensions.

13. Maintenance device according to any of the preceding claims, **characterised by** at least one magnetic retaining means (17).

14. Maintenance device according to any of the preceding claims, **characterised by** a frame (19) which extends along the sealing device (4) and is intended for stabilising the hollow body (2).

15. Maintenance device according to any of the preceding claims, **characterised by** sensors for detecting the position of the sealing device (4).

16. Maintenance device according to any of the preceding claims for a hollow body (2) in the form of a pipeline, wherein the adapter (3) and the remainder of the sealing device (4) are designed as shell-shaped or cylindrical surface elements.

17. Maintenance device according to any of the preceding claims, **characterised in that** the sealing device (4) comprises a replaceable seal (29).

18. Maintenance device according to any of the preceding claims, **characterised in that** the sealing device (4) comprises a slider (28) which allows at least part of the functional unit (12) to be changed.

19. Maintenance device according to any of the preceding claims, **characterised by** a covering (32).

20. Method for providing maintenance access on an elongate, and in particular tubular, hollow body (2) which is designed to conduct a fluid, in particular by using a maintenance device (1) according to any of the preceding claims, wherein a sealing device (4) which comprises an adapter (3) which can be placed on the hollow body (2) in a sealing manner, is provided with a surface (7) which faces away from the hollow body (2), and forms a working region used to access the hollow body (2), has a shape which is adapted to the outside of the hollow body (2) and is attached to said hollow body in a sealing manner, and the sealing device (4) is designed and attached such that a working region (9) for making an opening in the pipeline (2) is formed, which working region is sealed off from a surrounding area of the hollow body (2) by means of the sealing device (4), wherein the sealing device (4) which is provided with a functional unit (12) is movable along the hollow body (2) and the functional unit (12) which comprises a cutting tool which is intended for making an opening and acts on a wall of the hollow body (2) is moved, as a result of a movement of the sealing device (4) relative to a surface of the hollow body (2), in both a first direction (A) and in a second direction (B), which is transverse to said first direction, along a two-dimensional pattern, and cuts into a wall of the hollow body (2), wherein the sealing device (4) simultaneously continues to seal the working region (9) from the surrounding area, and wherein parts (11) of the sealing device (4) are displaced along the adapter (3), whilst maintaining a tight seal.

21. Method according to claim 20, **characterised in that** the sealing device (4) is moved relative to the surface of the hollow body (2) in two dimensions (A, B).

22. Method according to either claim 20 or claim 21, **characterised in that** the cutting tool for making an opening in the hollow body (12) can be moved in both the longitudinal direction thereof and the direction transverse to said direction by means of the sealing device (4).

23. Method according to any of claims 20 to 22, **characterised in that** the cutting device is successively moved first in a direction (A) and then in a direction (B) which is transverse to the first direction (B).

24. Method according to any of claims 20 to 23, **characterised in that** the working region (9) is released by displacing at least one sliding shell of the sealing device (4) along the adapter (3), when viewed from a side of the sliding shell which is remote from the adapter (7).

25. Method according to claim 24, **characterised in that** the opening is accessible as a result of individual parts (11) of the multi-part sealing device (4) being moved apart from one another.

## Revendications

1. Dispositif d'entretien destiné à entretenir un corps creux (2), de forme allongée et en particulier tubulaire, qui est adapté pour conduire un fluide, lequel dispositif d'entretien comprend un dispositif d'étanchéité (4) pourvu d'une unité fonctionnelle (12), destinée à rendre étanche une zone de travail (9) par rapport à un environnement du corps creux (2) et mobile le long d'une surface du corps creux (2) ; le dispositif d'étanchéité est pourvu d'un adaptateur (3) qui peut être fixé de façon étanche au corps creux (2), qui possède une surface (7) opposée au corps creux (2) et qui forme une zone de travail (9) qui permet d'accéder au corps creux (2) ; un élément d'étanchéité (11) du dispositif d'étanchéité est mobile le long de l'adaptateur (3) tout en réalisant une étanchéité sur la zone de travail (9) à la fois dans une première direction (A) et dans une seconde direction (B) s'étendant transversalement à la première direction de sorte que l'au moins une unité fonctionnelle (12) est mobile par rapport à une surface du corps creux (2) à entretenir le long d'un modèle de mouvement bidimensionnel.

2. Dispositif d'entretien selon la revendication 1, **caractérisé en ce que** la surface (7) de l'adaptateur (3) est réalisée sous la forme d'une surface de glissement.

3. Dispositif d'entretien selon l'une des revendications 1 ou 2, **caractérisé en ce que** l'adaptateur (3) est constitué de plusieurs parties dans une direction transversale à l'extension longitudinale et/ou dans une direction de l'extension longitudinale du corps creux (2).

4. Dispositif d'entretien selon l'une des revendications 1 à 3, **caractérisé en ce que** la zone de travail (9) est formée au moins partiellement par au moins un évidement de l'adaptateur (3).

5. Dispositif d'entretien selon l'une des revendications 1 à 4, **caractérisé en ce que** l'extension de l'adaptateur (3) le long du corps creux (3) va au-delà de l'extension des autres parties (11) du dispositif d'étanchéité (4).

6. Dispositif d'entretien selon l'une des revendications précédentes, **caractérisé en ce qu'**un côté inférieur du dispositif d'étanchéité (4), qui est dirigé vers le corps creux (2) à entretenir, forme une surface incurvée.

7. Dispositif d'entretien selon la revendication 6, **caractérisé en ce que** le dispositif d'étanchéité (4) comprend des éléments coulissants qui ont sensiblement une forme de coque ou de cylindrique creux.

8. Dispositif d'entretien selon l'une des revendications précédentes, **caractérisé en ce que** l'unité fonctionnelle (12) comprend un dispositif de coupe qui est conçu pour ménager une ouverture dans le corps creux (2) notamment par fraisage ou bien par enlèvement de matière.

9. Dispositif d'entretien selon l'une des revendications précédentes, **caractérisé en ce que** le dispositif d'étanchéité (4) est constitué de plusieurs parties.

10. Dispositif d'entretien selon la revendication 9, **caractérisé en ce que** des parties individuelles (11) du dispositif d'étanchéité (4) sont mobiles, en particulier indépendamment les unes des autres, au moins dans deux directions (A, B) transversales l'une par rapport l'autre le long du côté extérieur du corps creux (2) à entretenir.

11. Dispositif d'entretien selon la revendication 9 ou 10, **caractérisé en ce que** les parties individuelles (11) du dispositif d'étanchéité (4) comportent au moins deux côtés de raccordement opposé l'un à l'autre.

12. Dispositif d'entretien selon l'une des revendications précédentes, **caractérisé par** dispositif d'entraînement qui permet un mouvement bidimensionnel du dispositif d'étanchéité (4).

13. Dispositif d'entretien selon l'une des revendications précédentes, **caractérisé par** au moins un support d'aimant (17).

14. Dispositif d'entretien selon l'une des revendications précédentes, **caractérisé par** un cadre (19) qui s'étend le long du dispositif d'étanchéité (4) et qui est destiné à stabiliser le corps creux (2).

15. Dispositif d'entretien selon l'une des revendications précédentes, **caractérisé par** des capteurs destinés à détecter la position du dispositif d'étanchéité (4).

16. Dispositif d'entretien selon l'une des revendications précédentes destiné un corps creux (2) configuré en canalisation, l'adaptateur (3) et l'autre dispositif d'étanchéité (4) étant configurés en éléments de surface en forme de coque ou de cylindre.

17. Dispositif d'entretien selon l'une des revendications précédentes, **caractérisé en ce que** le dispositif d'étanchéité (4) comporte une garniture d'étanchéité (29) remplaçable.

18. Dispositif d'entretien selon l'une des revendications précédentes, **caractérisé en ce que** le dispositif d'étanchéité (4) comprend un coulisseau (28) qui permet de changer au moins une partie de l'unité fonctionnelle (12).

19. Dispositif d'entretien selon l'une des revendications précédentes, **caractérisé par** une gaine (32).

20. Procédé de réalisation d'un accès d'entretien à un corps creux (2) de forme allongée et en particulier tubulaire, qui est adapté pour conduire un fluide, en particulier à l'aide d'un dispositif d'entretien (1) selon l'une des revendications précédentes ; un dispositif d'étanchéité(4), qui comporte un adaptateur (3) formant une zone de travail qui permet d'accéder au corps creux (2), qui est pourvu d'une surface (7) opposée au corps creux (2) et qui est destiné à être placé de façon étanche au corps (2), est adapté à la forme du côté extérieur du corps creux (2) et est monté de façon étanche sur celui-ci ; le dispositif d'étanchéité (4) est formé et monté de façon à configurer une zone de travail (9) pour ménager une ouverture dans le conduit tubulaire (2), laquelle zone de travail est rendue étanche par rapport à un environnement du corps creux (2) par le dispositif d'étanchéité (4) ; le dispositif d'étanchéité (4), pourvu d'une unité fonctionnelle (12), est mobile le long du corps creux (2) et l'unité fonctionnelle (12), qui comporte un outil de coupe intervenant sur une paroi du corps creux (2), est déplacée par un mouvement du dispositif d'étanchéité (4) par rapport à une surface du corps creux (2) dans une première direction (A) et une seconde direction (B) transversale à la première direction le long d'un modèle bidirectionnel et découpe une paroi du corps creux (2) ; dans le même temps, le dispositif d'étanchéité (4) rend en outre la zone de travail (9) étanche par rapport à l'environnement ; des parties (11) du dispositif d'étanchéité sont déplacées le long de l'adaptateur (3) en réalisant une étanchéité.

21. Procédé selon la revendication 20, **caractérisé en ce que** le dispositif d'étanchéité (4) est déplacé dans deux dimensions (A, B) par rapport à la surface du corps creux (2) .

22. Procédé selon la revendication 20 ou 21, **caractérisé en ce que** l'outil de coupe destiné à ménager une ouverture dans le corps creux (12) peut être déplacée sur le dispositif d'étanchéité (4) dans la direction longitudinale du corps creux et transversalement à cette direction.

23. Procédé selon l'une des revendications 20 à 22, **caractérisé en ce que** le mouvement du dispositif de coupe est effectué tout d'abord dans une première direction (A) puis dans une direction (B) transversale à la première direction (A) .

24. Procédé selon l'une des revendications 20 à 23, **caractérisé en ce qu'**un coulissement d'au moins une coque de glissement du dispositif d'étanchéité (4) le long de l'adaptateur (3) permet de libérer la zone de travail (9) lorsque l'on regarde du côté de la coque de glissement qui est opposé à l'adaptateur (7).

25. Procédé selon la revendication 24, **caractérisé en ce que** l'ouverture est accessible par écartement des parties individuelles (11) du dispositif d'étanchéité (4) constitué de plusieurs parties.
